## Europäisches Patentamt

## European Patent Office

## Office européen des brevets

(19)

(11) **EP 1 114 958 B1**

(12) **EUROPÄISCHE PATENTSCHRIFT**

| | |
|---|---|
| (45) Veröffentlichungstag und Bekanntmachung des Hinweises auf die Patenterteilung: **10.08.2005 Patentblatt 2005/32** | (51) Int Cl.$^7$: **F16K 31/40**, F16K 31/04 |

(21) Anmeldenummer: **00122674.5**

(22) Anmeldetag: **18.10.2000**

(54) **Elektromotorisch ansteuerbare Ventileinrichtung**

Motor-actuated valve device

Dispositif de soupape commandé par moteur électrique

(84) Benannte Vertragsstaaten:
**AT CH DE IT LI SE**

(30) Priorität: **07.01.2000 DE 20000165 U**

(43) Veröffentlichungstag der Anmeldung:
**11.07.2001 Patentblatt 2001/28**

(73) Patentinhaber: **A. und K. Müller GmbH & Co. KG**
**40595 Düsseldorf (DE)**

(72) Erfinder:
• **Moldenhauer, Hermann**
 **40625 Düsseldorf (DE)**
• **Berger, Gerd**
 **40764 Langenfeld (DE)**
• **Glaus, Uwe**
 **40593 Düsseldorf (DE)**

(74) Vertreter:
**Feder, Wolf-Dietrich, Dr. Dipl.-Phys. et al**
**Dr. Wolf-D. Feder,**
**Dipl.-Ing. P.-C. Sroka**
**Dominikanerstrasse 37**
**40545 Düsseldorf (DE)**

(56) Entgegenhaltungen:
 **EP-A- 0 360 569**   **EP-A- 0 416 339**
 **US-A- 4 995 585**

 • **PATENT ABSTRACTS OF JAPAN vol. 1996, no. 03, 29. März 1996 (1996-03-29) & JP 07 289782 A (TOSHIBA CORP;OTHERS: 01), 7. November 1995 (1995-11-07)**

EP 1 114 958 B1

**Beschreibung**

Die Erfindung betrifft eine elektromotorisch ansteuerbare Ventileinrichtung mit einem eigenmediumbetätigten Servoventil gemäß den Merkmalen aus dem Oberbegriff des Patentanspruchs 1. Eine solche Einrichtung ist bekannt und in US-A-4 995 585 beschrieben.

Servoventile sind an sich bekannt.

Herkömmliche Servoventile bekannter Bauart lassen sich lediglich in zwei Betriebszustände schalten, nämlich in die geöffnete oder die geschlossene Stellung.

Es besteht aber auch immer wieder die Forderung nach Ventilen, die stufenlos von der geöffneten in die geschlossene Stellung steuerbar sind, d.h. mit denen der Volumenstrom in Abhängigkeit vom Ventilhub proportional eingestellt werden kann.

Der Erfindung liegt die Aufgabe zugrunde, eine elektromotorisch ansteuerbare Ventileinrichtung mit einem Servoventil gemäß den Merkmalen aus dem Oberbegriff des Patentanspruchs 1 so auszubilden, daß insgesamt ein Proportionalventil entsteht, das eine sehr präzise Einstellung erlaubt und nur sehr wenig Ansteuerenergie benötigt. Dabei soll es ermöglicht werden, eine genaue Dosierung mit konstantem Volumenstrom, unabhängig vom Wasser-Versorgungsdruck, vorzunehmen.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht einerseits darin, zur Betätigung des die Entlastungsbohrung des Differentialkolbens öffnenden und verschließenden Steuerorgans einen Elektromotor einzusetzen, der unter Zwischenschaltung lediglich eines einfachen Schraubgetriebes als Untersetzungsgetriebe mit jeder Umdrehung bzw. Teilumdrehung seiner Abtriebswelle eine definierte Verschiebung der Steuerstange und damit des Steuerorgans bewirkt und andererseits darin, den durch das Ventil strömenden Volumenstrom zu messen, den Meßwert in einer Steuereinrichtung mit einem Sollwert zu vergleichen und dem Schrittmotor im Sinne eines Regelkreises derartige Steuersignale zuzuführen, daß der vorgegebene Sollwert für den Volumenstrom eingehalten wird.

Mittels eines Schrittmotors kann der Hub des Steuerorgans und damit auch der Hub des Ventiltellers des Servoventils sehr präzise und mit geringer Leistung gesteuert werden. Der die Vorrichtung zur Erfassung des durch das Ventil strömenden Volumenstroms und die Steuereinrichtung enthaltende Regelkreis sorgt für die Einhaltung des gewünschten Durchflußwertes. Damit die Ventileinrichtung auch im Niederdruckbereich anwendbar ist, hat es sich als vorteilhaft erwiesen, wenn eine zur Abdichtung des Druckraums gegen den Steuerraum verwendete erste Rollmembran, in die der Ventilteller integriert ist, als in Öffnungsrichtung vorgespanntes Federelement ausgebildet ist, so daß der Ventilteller auch ohne Druck dem Steuerorgan folgt, wenn dieses sich von der Entlastungsbohrung entfernt.

Im folgenden wird anhand der beigefügten Zeichnungen ein Ausführungsbeispiel für eine elektromotorisch ansteuerbare Ventileinrichtung nach der Erfindung näher erläutert.

In den Zeichnungen zeigen:

Fig. 1 einen Axialschnitt durch die Ventileinrichtung in der geschlossenen Stellung;

Fig. 2 eine Darstellung analog Fig. 1 in einer halbgeöffneten Stellung;

Fig. 3 eine Darstellung analog Fig. 1 in der vollgeöffneten Stellung;

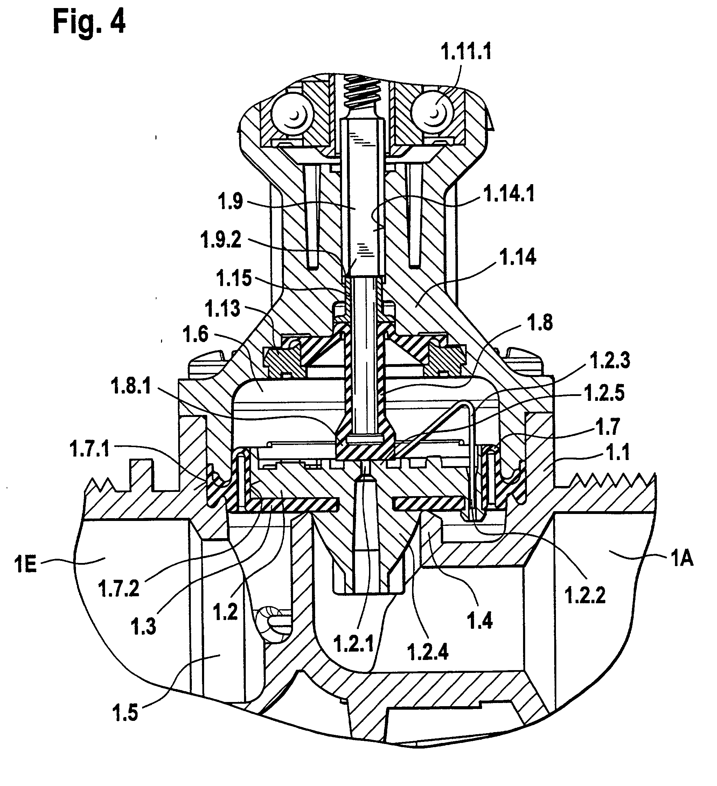

Fig. 4 in vergrößerter Darstellung einen Teilschnitt durch das Servoventil im Bereich des Steuer- und Druckraums;

Fig. 5 in qualitativer Darstellung eine Kennlinienschar einer Ventileinrichtung nach den Fig. 1 bis 4;

Fig. 6 den Differentialkolben des Servoventils nach Fig. 1 bis 4 in einer Aufsicht vom Steuerraum her;

Fig. 6A den Differentialkolben nach Fig. 6 im Schnitt;

Fig. 6B den Differentialkolben nach Fig. 6 in einer Ansicht vom Ventilsitz her;

Fig. 6C den Differentialkolben nach Fig. 6 bis 6B in perspektivischer Darstellung.

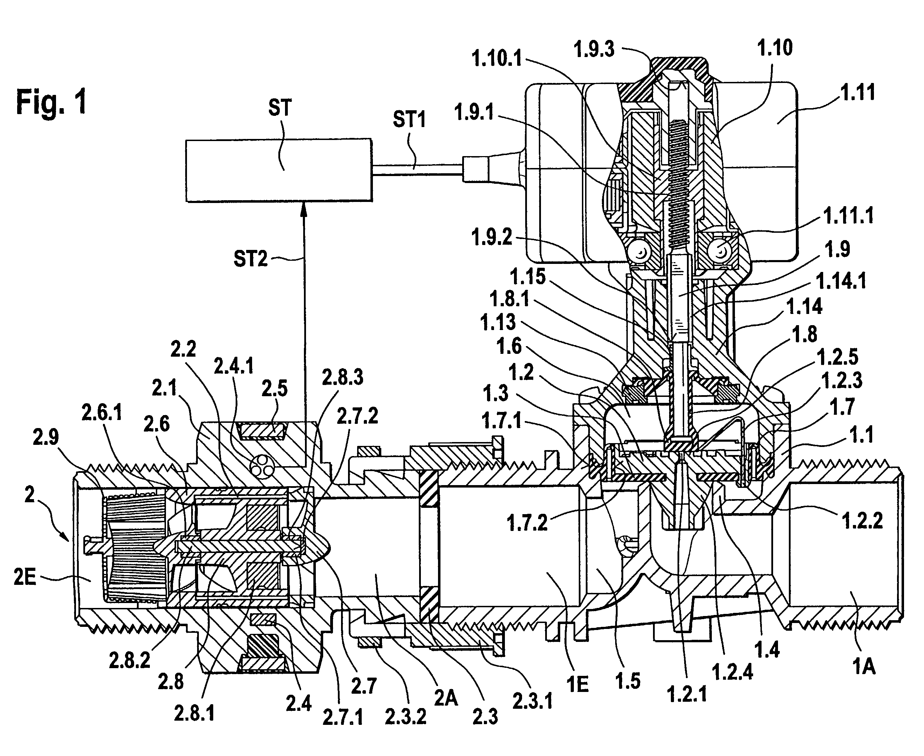

Die in den Fig. 1 bis 3 insgesamt dargestellte Ventileinrichtung besteht aus einem von einer Steuereinrichtung ST her angesteuerten Servoventil mit einer vor- oder nachgeschalteten Vorrichtung zur Erfassung des durch das Ventil strömenden Volumenstroms.

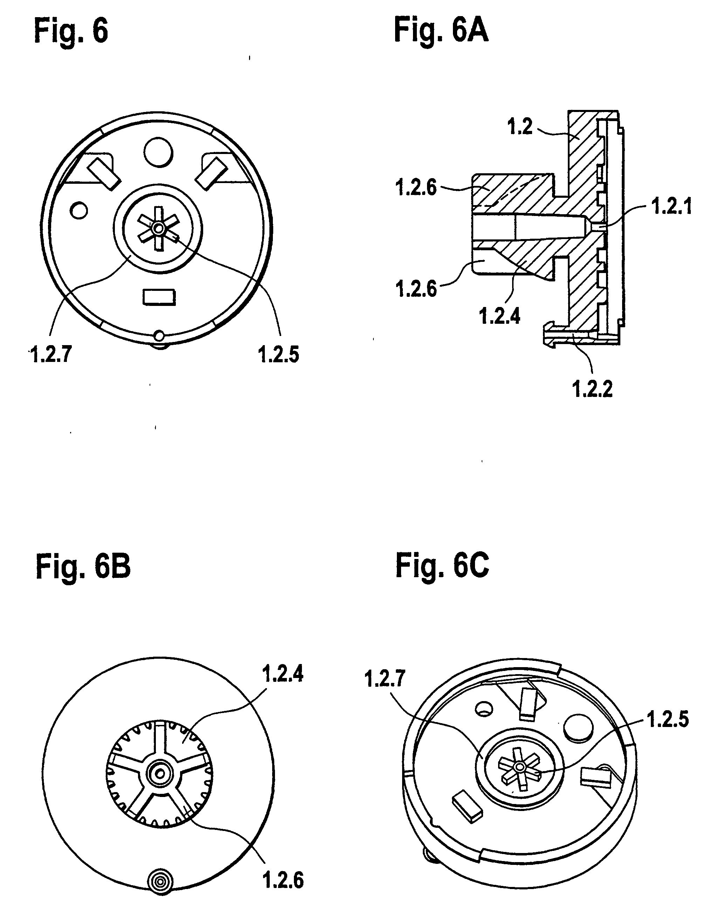

Das Servoventil besitzt ein Ventilgehäuse 1.1, an dem ein Ventileinlaß 1E und ein Ventilauslaß 1A angeordnet sind. Im Ventilgehäuse 1.1 ist ein Differentialkolben 1.2 verschiebbar angeordnet, der einen Ventilteller 1.3 trägt, der einem Ventilsitz 1.4 gegenüberliegt. Der Ventilteller 1.3 ist einstückig in eine Rollmembran 1.7 integriert, deren äußerer Rand 1.7.1 dichtend mit dem Ventilgehäuse 1.1 verbunden ist, während ihr innerer Rand 1.7.2 mit dem Ventilteller 1.3 und damit dem Differentialkolben 1.2 verbunden ist. Die Rollmembran 1.7 trennt einen an der einen Seite des Differentialkolbens 1.2 angeordneten Druckraum 1.5, der mit dem Ventileinlaß 1 E verbunden ist, von einem an der anderen Seite des Differentialkolbens 1.2 angeordneten Steuerraum 1.6, der über eine mittig im Differentialkolben angeordnete Entlastungsbohrung 1.2.1 mit dem Ventilauslaß 1A und über eine außermittig im Differentialkolben 1.2 angeordnete Steuerbohrung 1.2.2 mit dem Druckraum 1.5 verbunden ist. Der Druckraum 1.5 ist bei geöffnetem Ventil über den Ventilsitz 1.4 mit dem Ventilauslaß 1A verbunden. Die Rollmembran 1.7 ist als in Öffnungsrichtung vorgespanntes Federelement ausgebildet, damit das Servoventil auch bei Druck 0 leicht öffnet. Der Differentialkolben 1.2 ragt mit einem Regelkörper 1.2.4 in den Ventilsitz 1.4 hinein, wobei der Regelkörper durch, im dargestellten Ausführungsbeispiel (Fig. 6B), fünf Führungsstege 1.2.6 am Ventilsitz 1.4 geführt ist. Der Regelkörper 1.2.4 besitzt eine errechnete Regelkontur, die weiter unten näher beschrieben wird und die zu einer linearen Kennlinie bei der Ventilverstellung führt.

Innerhalb des Steuerraums 1.6 ist eine Feder 1.2.3 angerordnet, von der ein Endabschnitt in die Steuerbohrung 1.2.2 hineingeführt ist, wodurch diese gegen Verstopfung durch im Medium enthaltene Verunreinigungen gesichert wird.

An der dem Differentialkolben 1.2 gegenüberliegenden Seite des Steuerraums 1.6 ist eine weitere Rollmembran 1.8 angeordnet, in die an ihrer dem Differentialkolben 1.2 zugewandten Seite, der Entlastungsbohrung 1.2.1 gegenüberliegend, das Steuerorgan 1.8.1 integriert ist. Die Rollmembran 1.8 wird durch einen Ring 1.13, der im Steuerraum 1.6 befestigt ist, gehalten und dichtet die sen gegenüber einem Adapterstück 1.14 ab, das den oberen Teil des Ventilgehäuses 1.1 bildet. Da der Steuerraum 1.6 bei geschlossenem Ventil (Fig. 1) unter Systemdruck steht und auf der äußeren Seite der Rollmembran 1.8 Atmosphärendruck herrscht, ist die Rollmembran 1.8 an ihrer Außenseite durch einen Stützring 1.15 abgestützt, der den inneren Abschnitt einer insgesamt mit 1.9 bezeichneten Steuerstange umfaßt, deren inneres Ende das Steuerorgan 1.81 formschlüssig hält. Der mittlere Abschnitt der Steuerstange 1.9 ist in einer Vierkantführung 1.14.1 geführt, während der äußere Abschnitt ein Außengewinde 1.9.1 aufweist. Der sich mit der Steuerstange bewegende Stützring 1.15 stützt sich an der durch die Vierkantausbildung des mittleren Abschnittes der Steuerstange 1.9 gebildeten Verdickung ab. Durch die Vierkantführung ist die Steuerstange 1.9 verschiebbar, aber unverdrehbar aus dem Steuerraum 1.6 und dem Ventilgehäuse 1.1 herausgeführt. Am Ventilgehäuse 1.1 ist über das Adapterstück 1.14 ein Schrittmotor 1.11 befestigt. Die Abtriebswelle 1.10 des Schrittmotors 1.11 verläuft koaxial zur Steuerstange 1.9 und ist als Gewindemutter 1.10.1 ausgebildet, in die das äußere mit dem Außengewinde 1.9.1 versehene Ende der Steuerstange 1.9 hineingeführt ist. Dabei greift das Außengewinde 1.9.1 der Steuerstange 1.9 in das Innengewinde der Gewindemutter 1.10.1 ein. Dieses einfach ausgebildete Schraubgetriebe bewirkt, daß bei jeder Drehung der Gewindemutter 1.10.1 um einen vorgegebenen Winkelbetrag die Steuerstange 1.9 je nach der Drehrichtung der Antriebswelle 1.10 eine Bewegung in Schließrichtung oder in Öffnungsrichtung des Steuerorgans 1.8.1 ausführt.

Anstelle der Rollmembran 1.8 kann auch ein Faltenbalg verwendet werden und an die Stelle des Schrittmotors 1.11 kann ein Gleichstrommotor mit Inkrementalgeber treten.

Die Steuerstange 1.9 läuft gegen zwei mechanische Anschläge, und zwar an ihrer Innenseite gegen eine Anschlagsfläche 1.9.2 im Bereich des inneren Endes der Vierkantführung 1.14.1 des Adapterstücks 1.14 und eine zweite Anschlagfläche 1.9.3 an der Oberseite des Schrittmotors 1.11. Durch die beiden Anschlagflächen 1.9.2 und 1.9.3 wird die Bewegung des Steuerorgans 1.8.1 in beiden Richtungen begrenzt, so daß eine Maximalverschiebung nicht überschritten werden kann und somit eine Beschädigung von Bauteilen, insbesondere im Bereich der beiden Rollmembranen 1.7 und 1.8 vermieden wird. Um einen besonders leichten und präzisen Lauf der Abtriebswelle 1.10 des Schrittmotors 1.11 zu erreichen, ist diese in einem Kugellager 1.11.1 gelagert.

Das Steuerorgan 1.8.1 liegt in der in Fig. 1 dargestellten Geschlossenstellung an einer Anschlagfläche des Differentialkolbens 1.3 an, die dem Steuerraum 1.6 zugewandt ist und aus um die Entlastungsbohrung 1.2.1 herum sternförmig und mit einem Versatz gegenüber der Oberkante 1.2.7 angeordneten Stegen 1.2.5 besteht, welche die Dichtungsfläche des Steuerorgans 1.8.1 abstützen. Wie aus Fig. 6 und 6C zu entnehmen, sind im dargestellten Ausführungsbeispiel sechs Stege 1.2.5 um die Entlastungsbohrung 1.2.1 herum angeordnet. Diese Ausbildung bewirkt, daß die Dichtungsfläche des Steuerorgans 1.8.1 durch die entgegenwirkende Kraft keine bleibende Verformung erfährt, aber immer dichtend ist.

Der oben beschriebene Regelkörper 1.2.4 an der dem Ventilsitz 1.4 zugewandten Seite des Differentialkolbens 1.2 besitzt eine Regelkontur, welche die hubproportionale Durchflußabhängigkeit des Ventils bei konstantem Druck bestimmt und durch folgende Funktionen gegeben ist:

$$\dot{V}_{(z)} = A_{(z)} \cdot \bar{c} \doteq \left[ \pi \cdot \left( r_0^2 - r_{(z)}^2 \right) - n \cdot b \left( r_0 - r_{(z)} \right) \right] \cdot \bar{c}$$

$$r_{(z)} = -\frac{n \cdot b}{2\pi} \sqrt{\left( r_0 + \frac{n \cdot b}{2\pi} \right)^2 - \frac{k \cdot z}{\pi}}$$

Hierbei bedeutet:

$V_{(z)}$ = Volumenstrom in Abhängigkeit vom Hub
$A_{(z)}$ = Freigegebener Querschnitt am Ventilsitz (1.4) in Abhängigkeit vom Hub
c = mittlere Strömungsgeschwindigkeit
$r_0$ = Ventilsitzradius
$r_{(z)}$ = Radius in Abhängigkeit vom Hub
n = Anzahl der Führungstege (1.2.6) des Differentialkolben (1.2)
b = Breite der Führungstege (1.2.6) des Differentialkolben (1.2)
k = Formfaktor der Regelkontur (1.2.4)

Der Schrittmotor 1.11 wird über eine Leitung ST1 von der Steuereinrichtung ST aus mit elektrischen Steuerimpulsen angesteuert.

Im dargestellten Ausführungsbeispiel ist dem Servoventil eine Vorrichtung 2 zur Erfassung des durch das Ventil strömenden Volumenstroms vorgeschaltet. Selbstverständlich kann eine derartige Vorrichtung auch dem Servoventil nachgeschaltet sein. Die Vorrichtung ist als Durchflußmeßturbine ausgebildet und besitzt ein Gehäuse 2.1, an dem ein Einlaß 2E und ein Auslaß 2A angeordnet sind. Das Gehäuse 2.1 ist über eine Dichtung 2.3 mit einer Überwurfmutter 2.3.1 an das Ventilgehäuse 1.1 dichtend angeflanscht. Im Einlaß 2E des Gehäuses 2.1 befindet sich als Einsatzpatrone die Meßturbine 2.2 mit einem vorgeschalteten Siebelement 2.9. Um die Verkrallung der Überwurfmutter 2.3.1 mit dem Gehäuse 2.1 zu sichern, ist über die Überwurfmutter 2.3.1 ein Haltering 2.3.2 aus Metall gelegt. Im Gehäuse 2.1 ist in Umfangsrichtung ein Hall-Sensor 2.4 mit einem über eine Leitung ST2 an die Steuereinrichtung ST angeschlossenen Anschlußkabel 2.4.1 angeordnet. Der Hall-Sensor 2.4 ist in das Gehäuse 2.1 eingegossen. Innerhalb der Meßturbine 2.2 ist ein Rotor 2.8 angeordnet, der zwei eingegossene axial magnetisierte Magnete 2.8.1 enthält, die in gleichgerichteter Polarität eingebaut sind. Der Rotor besitzt eine Welle 2.8.2 aus Edelstahl mit Kugelstirnflächen 2.8.3. Die Welle 2.8.2 ist mit ihren Enden in Lagerbuchsen 2.6.1 und 2.7.1 gelagert. Die Lagerbuchse 2.6.1 ist Teil eines Innengehäuses 2.6 der Meßturbine, das eine Leitschaufelgeometrie aufweist, die den Mediumstrahl in Drall versetzt und nimmt die radialen Kräfte der Welle 2.8.2 auf. Die Lagerbuchse 2.7.1 ist Teil einer Regelscheibe 2.7, die an der Ausgangsseite der Meßturbine 2.2 angeordnet ist und deren Schaufeln die gleiche Richtung besitzen wie die des Rotors 2.8 und die zur Schwächung des Dralles des Mediumstrahls dient. Auch die Lagerbuchse 2.7.1 nimmt die radialen Kräfte der Welle 2.8.2 auf, und ein eingesetzter Rubin 2.7.2 dient zur Aufnahme der axialen Kräfte. Da die mit dem Rotor 2.8 rotierenden Magneten 2.8.1 ein schnellwechselndes Magnetfeld erzeugen, ist in das Gehäuse 2.1 zur Abschirmung ein Entstörring 2.5 aus Metall eingelegt.

Die Funktion der oben beschriebenen Ventileinrichtung ist folgende:

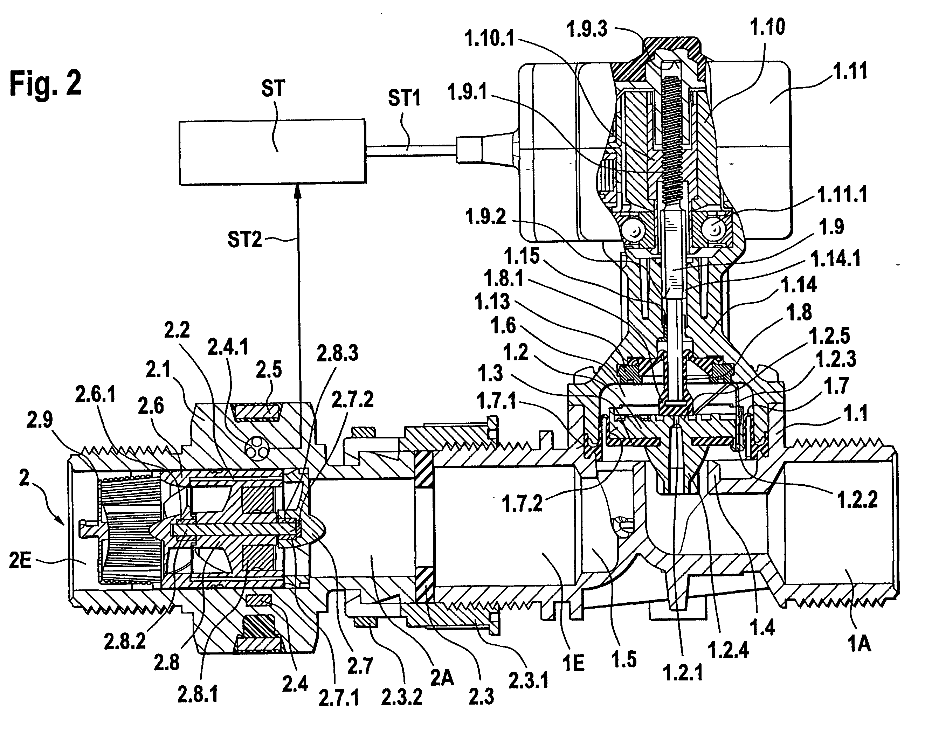

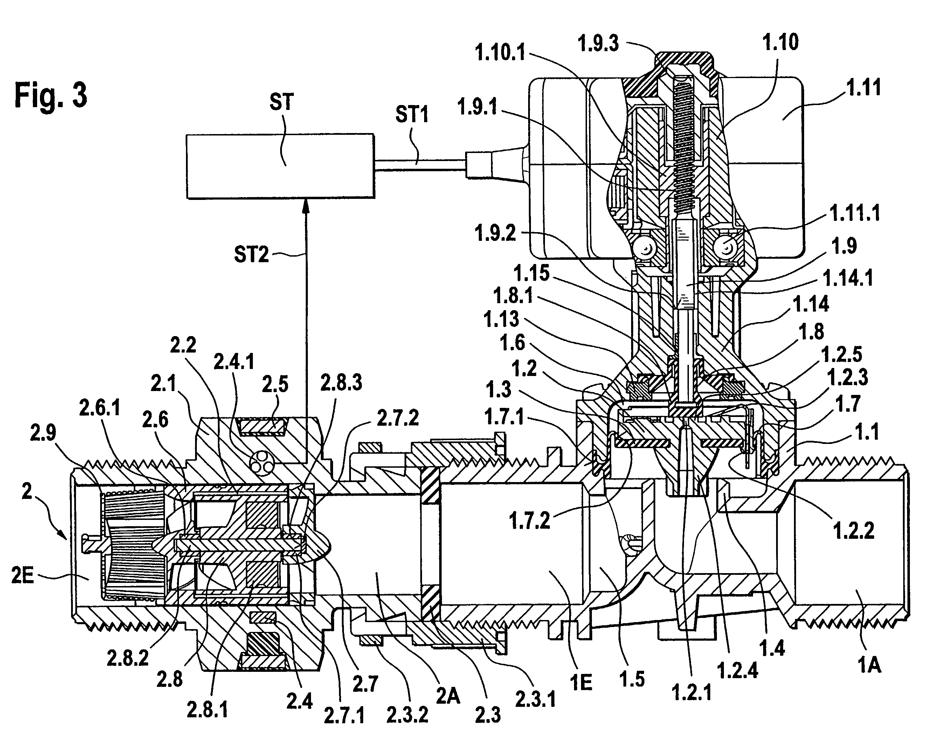

Fig. 1 zeigt das Servoventil in der geschlossenen Stellung. Von der Steuereinrichtung ST aus werden dem Schrittmotor 1.11 Steuerimpulse zugeführt derart, daß durch eine entsprechende Drehung des Rotors 1.10.1 und Bewegung der Steuerstange 1.9 das Steuerorgan 1.8.1 die Entlastungsbohrung 1.2.1 frei gibt. Es erfolgt ein Druckausgleich zwischen dem Steuerraum 1.6 und dem Ventilauslaß 1A, so daß nunmehr bei ausreichendem Mediumdruck vom Ventileinlaß 1 E her der Differentialkolben 1.2 und damit der Ventilteller 1.3 zusätzlich durch den Mediumdruck angehoben wird und das Ventil öffnet. Wie bereits erwähnt, ist die Rollmembran 1.7 als Federelement ausgebildet, so daß das Öffnen auch bei einem Mediumsdruck von 0 an mit Sicherheit stattfindet. Eine derartige als Federelement wirkende Rollmembran und ihre Wirkung zur Unterstützung des Abhebens des Differentialkolbens ist an sich bekannt und beispielsweise EP 0 416 339 B1 beschrieben. Eine halbgeöffnete Stellung des Servoventils ist in Fig. 2 dargestellt, während Fig. 3 die voll geöffnete Stellung zeigt.

Im praktischen Betrieb wird vorab die geschlossene Stellung des Servoventils in der Steuereinrichtung ST abgespeichert. Die genaue Einstellung des Nullpunktes wird nach dem Anlegen der Speisespannung durch eine entsprechende Referenzbewegung von Steuerstange 1.9 und Steuerorgan 1.8.1 erreicht. Nach Verlust der Speisespannung wird eine neue Referenzfahrt in die Geschlossenstellung ausgeführt, um den Nullpunkt erneut festzulegen.

Alle Zwischenstellungen des Servoventils werden durch die Ansteuerung des Schrittmotors 1.11 mit von der elektrischen Steuereinrichtung ST abgegebenen elektrischen Impulsen vorgegeben. Einer bestimmten Anzahl von Schritten des Schrittmotors 1.11 ist ein entsprechender Hub der Steuerstange 1.9 über die Gewindesteigung fest zugeordnet, und somit ist auch ein bestimmter Hub des Differentialkolbens 1.2 definiert. Aufgrund der oben beschriebenen Ausbildung des Regelkörpers 1.2.4 am Differentialkolben 1.2 wird ein linearer Durchsatz in Abhängigkeit vom Ventilhub bzw. von den Steuerimpulsen erreicht. Eine Kennlinienangleichung für die Mengenerfassung und deren Ablage in der Steuereinrichtung ST ist somit nicht erforderlich.

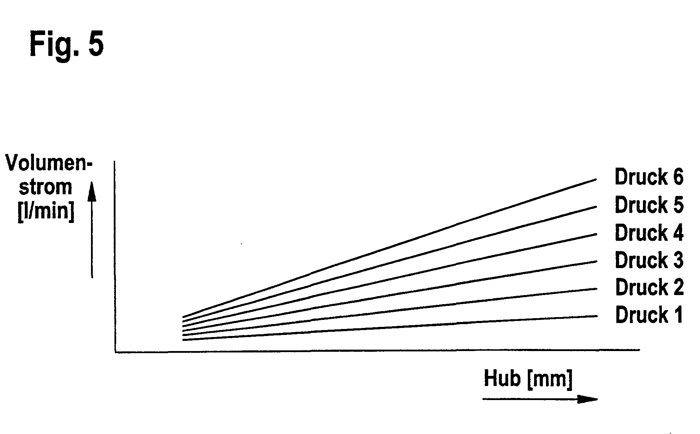

Fig. 5 zeigt in einer qualitativen Darstellung einer Kennlinienschar die Abhängigkeit des Volumenstroms vom Hub bei unterschiedlichen Vordrücken.

Bei der Verwendung eines motorischen Antriebs ohne absolute Huberfassung, wie im dargestellten Ausführungsbeispiel, muß bei Stromausfall, also dem Verlust der Speisespannung, das Schließen des Ventils sichergestellt werden. Dies erfolgt dadurch, daß die Steuereinrichtung ST eine Batterie oder einer Kapazität zur Speisung einer Notstromversorgung enthält, die bei Stromausfall die Verstellung des Ventils in Schließrichtung veranlaßt. Diese Batterie oder Kapazität kann im normalen Netzbetrieb laufend oder in vorgegebenen Abständen auf ihren Ladezustand hin überwacht werden. Erkennt die Steuereinrichtung ST ein Absinken der Batteriespannung unter einen vorgegebenen Wert, so wird die Ventilbetätigung im öffnenden Sinn gesperrt und durch ein entsprechendes Signal ein Batteriewechsel angefordert.

Zur Aufrechterhaltung eines konstanten Volumenstroms, unabhängig vom Mediumsdruck, dient die oben beschriebene Durchflußmeßturbine. Durch die Rotation der im Rotor 2.8 angeordneten Magnete 2.8.1 wird ein Magnet-Wechselfeld erzeugt, das vom Hall-Sensor 2.4 erfaßt wird, der ein auswertbares Signal erzeugt, das der Steuereinrichtung ST zugeführt wird. Durch eine Zuordnung des Signals zu einem gegebenen Durchfluß kann der Volumenstrom exakt bestimmt werden und als Ist-Volumenstromwert der Steuereinrichtung ST zugeführt werden. Dieser wird ein Soll-Volumenstromwert vorgegeben. Weicht diese Sollvorgabe von dem Ist-Signal ab, so gibt die Steuereinrichtung ST an den Schrittmotor 1.11 solange Impulse zur Verstellung der Steuerstange 1.9 ab, bis die Sollvorgabe erreicht ist. Durch diesen Regelkreis ist es möglich, den Volumenstrom proportional zu einer Sollvorgabe einzustellen und das weitgehend unabhängig vom Mediumsdruck.

Bei Stromausfall erfolgt die Verstellung des Ventils in Schließrichtung solange, bis die Durchflußmeßturbine keine Meßimpulse mehr an die Steuereinrichtung liefert.

**Patentansprüche**

1. Elektromotorisch ansteuerbare Ventileinrichtung mit einem eigenmediumbetätigten Servoventil, das einen in einem Ventilgehäuse (1.1) verschiebbar angeordneten, den Ventilteller (1.3) tragenden Differentialkolben (1.2) aufweist, an dessen einer Seite ein mit dem Ventileinlaß (1E) verbundener Druckraum (1.5), der über einen dem Ventilteller gegenüberliegenden Ventilsitz (1.4) mit dem Ventilauslaß (1A) verbunden ist, und an dessen anderer Seite ein Steuerraum (1.6) angeordnet ist, der über eine mittig im Differentialkolben angeordnete Entlastungsbohrung (1.2.1) mit dem Ventilauslaß (1A) und über eine außermittig im Differentialkolben angebrachte Steuerbohrung (1.2.2) mit dem Druckraum (1.5) verbunden ist, wobei der Druckraum (1.5) gegen den Steuerraum (1.6) im Randbereich des Differentialkolbens (1.2) abgedichtet ist und die Entlastungsbohrung (1.2.1) steuerraumseitig durch ein Steuerorgan (1.8.1) verschließbar ist, welches über eine verschiebbar aus dem Steuerraum dichtend herausgeführte Steuerstange (1.9) und ein Schraubgetriebe (1.9.1 - 1.10.1) mit der Abtriebswelle eines Elektromotors (1.11) verbunden ist und eine elektronische Steuereinrichtung (ST) zur Ansteuerung des Elektromotors (1.11) vorgesehen ist, **dadurch gekennzeichnet, dass** der Steuereinrichtung (ST) von einer Vorrichtung (2) zur Erfassung des durch das Ventil strömenden Volumenstroms ein den IST-Volumenstromwert charakterisierendes elektrisches Signal zugeführt wird, aus dem von der Steuereinrichtung (ST) in Abhängigkeit von einem vorgegebenen SOLL-Volumenstromwert und gegebenenfalls weiteren Führungsparametern ein Steuersignal erzeugt wird, das dem Elektromotor (1.11) zugeführt wird.

2. Ventileinrichtung nach Anspruch 1, **dadurch gekennzeichnet, daß** der Elektromotor ein Schrittmotor (1.11) ist.

3. Ventileinrichtung nach Anspruch 1, **dadurch gekennzeichnet, daß** der Elektromotor ein Gleichstrommotor mit Inkrementalgeber ist.

4. Ventileinrichtung nach einem der Ansprüche 1 bis 3, **dadurch gekennzeichnet, daß** zur Abdichtung des Druckraums (1.5) gegen den Steuerraum (1.6) eine erste Rollmembran (1.7) dient, deren Außenrand dichtend mit dem Ventilgehäuse (1.1) und deren Innenrand dichtend mit dem Differentialkolben (1.2) verbunden ist und in die der Ventilteller (1.3) integriert ist und die als in Öffnungsrichtung vorgespanntes Federelement ausgebildet ist.

5. Ventileinrichtung nach einem der Ansprüche 1 bis 4, **dadurch gekennzeichnet, daß** die Steuerstange (1.9) gegenüber dem Steuerraum (1.6) durch eine zweite Rollmembran (1.8) abgedichtet ist, in die das von der Steuerstange (1.9) formschlüssig gehaltene Steuerorgan (1.8.1) integriert ist.

6. Ventileinrichtung nach einem der Ansprüche 1 bis 4, **dadurch gekennzeichnet, daß** die Steuerstange gegenüber dem Steuerraum durch einen Faltenbalg abgedichtet ist, in den das von der Steuerstange formschlüssig gehaltene Steuerorgan integriert ist.

7. Ventileinrichtung nach einem der Ansprüche 1 bis 6, **dadurch gekennzeichnet, daß** an der dem Ventilsitz (1.4) zugekehrten Seite des Differentialkolbens (1.2) ein beim Schließen in den Ventilsitz eintauchender Regelkörper (1.2.4) angeordnet ist, dessen vorgegebene Außenkontur derart ausgebildet ist, daß der Durchfluß bei konstantem Druck dem Ventilhub proportional ist.

8. Ventileinrichtung nach Anspruch 7, **dadurch gekennzeichnet, daß** der Regelkörper (1.2.4) an seiner Außenkontur eine vorgegebene Anzahl radial und axial verlaufender, am Ventilsitz (1.4) geführter Führungsstege (1.2.6) vorgegebener Breite aufweist und die hubproportionale Durchflußabhängigkeit des Ventils durch folgende Funktionen bestimmt ist

$$\dot{V}_{(z)} = A_{(z)} \cdot \bar{c} = \left[ \pi \cdot \left( r_0^2 - r_{(z)}^2 \right) - n \cdot b \left( r_0 - r_{(z)} \right) \right] \cdot \bar{c}$$

$$r_{(z)} = -\frac{n \cdot b}{2\pi} \sqrt{\left( r_0 + \frac{n \cdot b}{2\pi} \right)^2 - \frac{k \cdot z}{\pi}}$$

wobei:

$V_{(z)}$ = Volumenstrom in Abhängigkeit vom Hub
$A_{(z)}$ = Freigegebener Querschnitt am Ventilsitz (1.4) in Abhängigkeit vom Hub
$c$ = mittlere Strömungsgeschwindigkeit
$r_0$ = Ventilsitzradius
$r_{(z)}$ = Radius in Abhängigkeit vom Hub
$n$ = Anzahl der Führungstege (1.2.6) des Differentialkolben (1.2)
$b$ = Breite der Führungstege (1.2.6) des Differentialkolben (1.2)
$k$ = Formfaktor der Regelkontur (1.2.4)

9. Ventileinrichtung nach einem der Ansprüche 1 bis 8, **dadurch gekennzeichnet, daß** an der dem Steuerraum (1.6) zugewandten Seite des Differentialkolbens (1.2) um die Entlastungsbohrung (1.2.1) herum sternförmig und mit einem Versatz gegenüber der Oberkante (1.2.7) Stege (1.2.5) zur Abstützung der Dichtungsfläche des Steuerorgans angeordnet sind.

10. Ventileinrichtung nach Anspruch 5 und gegebenenfalls einem der Ansprüche 4 bis 6, **dadurch gekennzeichnet, daß** die zweite Rollmembrane (1.8) an der vom Steuerraum (1.6) abgewandten Seite durch einen in einer Ausnehmung des Ventilgehäuses (1.1) angeordneten, die Steuerstange (1.9) umfassenden und mit ihr verschiebbaren Stützring (1.15) abgestützt ist.

11. Ventileinrichtung nach einem der Ansprüche 1 bis 10, **dadurch gekennzeichnet, daß** die Vorrichtung zur Erfassung des durch das Ventil strömenden Volumenstroms als Durchflußmeßturbine (2) ausgebildet ist.

12. Ventileinrichtung nach Anspruch 11, **dadurch gekennzeichnet, daß** die Durchflußmeßturbine in Form einer Einsatzpatrone in das Ventilgehäuse einsetzbar ist.

**Claims**

1. Valve device which can be driven by an electric motor and has a servo valve, operated by its own medium, which in turn has a differential piston (1.2) which is arranged so that it can move in a valve housing (1.1) and carries the valve plate (1.3), and on one side of which there is a pressure space (1.5) connected to the valve inlet (1E) and also connected to the valve outlet (1A) via a valve seat (1.4) opposing the valve plate, and on the other side of which there is a control space (1.6) connected to the valve outlet (1A) via a relief bore (1.2.1) arranged centrally in the differential piston and to the pressure space (1.5) via a control bore (1.2.2) fitted off-centre in the differential piston, wherein the pressure space (1.5) is sealed off from the control space (1.6) in the edge region of the differential piston (1.2) and the relief bore (1.2.1) can be closed on the control space side by a control member (1.8.1), which is connected to the drive shaft of an electric motor (1.11) via a control rod (1.9) protruding hermetically from the control space so that it can move and via a screw transmission (1.9.1 - 1.10.1), and an electronic control device (ST) is provided for driving the electric motor (1.11), **characterised in that** an instrument (2) for recording the volumetric flow through the valve supplies the control device (ST) with an electrical signal characterising the volumetric-flow ACTUAL value from which the control device (ST) generates a control signal as a function of a predetermined volumetric-flow SETPOINT value, and optionally further guide parameters, and this is fed to the electric motor (1.11).

2. Valve device according to Claim 1, **characterised in that** the electric motor (1.11) is a stepper motor.

3. Valve device according to Claim 1, **characterised in that** the electric motor is a DC motor with an incremental encoder.

4. Valve device according to one of Claims 1 to 3, **characterised in that** a first rolling diaphragm (1.7) the outer edge of which is connected hermetically to the valve housing (1.1), the inner edge of which is connected hermetically to the differential piston (1.2), in which the valve plate (1.3) is integrated and which is designed as a spring element prestressed in the opening direction, is used in order to seal the pressure space (1.5) off from the control space (1.6).

5. Valve device according to one of Claims 1 to 4, **characterised in that** the control rod (1.9) is sealed off from the control space (1.6) by a second rolling diaphragm (1.8) in which the control member (1.8.1) held by interlocking with the control rod (1.9) is integrated.

6. Valve device according to one of Claims 1 to 4, **characterised in that** the control rod is sealed off from the control space by a bellows in which the control member held by interlocking with the control rod is integrated.

7. Valve device according to one of Claims 1 to 6, **characterised in that** a regulating body (1.2.4) which penetrates into the valve seat when closed, and whose predetermined outer contour is designed so that the flow through at a constant pressure is proportional to the valve stroke, is arranged on the side of the differential piston (1.2) facing the valve seat (1.4).

8. Valve device according to Claim 7, **characterised in that** the regulating body (1.2.4) has a predetermined number of guide bars (1.2.6) with a predetermined width, which extend radially and axially on its outer contour and are guided on the valve seat (1.4), and the capacity for flow through the valve in proportion to the stroke is determined by the following functions

$$\dot{V}_{(z)} = A_{(z)} \cdot \bar{c} = [\pi \cdot (r_0^2 - r_{(z)}^2) - n \cdot b (r_0 - r_{(z)})] \cdot \bar{c}$$

$$r_{(z)} = -\frac{n \cdot b}{2\pi} \sqrt{\left(r_0 + \frac{n \cdot b}{2\pi}\right)^2 - \frac{k \cdot z}{\pi}}$$

where:

$\dot{V}_{(z)}$ = volumetric flow as a function of the stroke
$A_{(z)}$ = cross section released on the valve seat (1.4) as a function of the stroke
$\bar{c}$ = average flow velocity
$r_0$ = valve seat radius

$r_{(z)} =$      radius as a function of the stroke
n =      number of guide bars (1.2.6) of the differential piston (1.2)
b =      width of the guide bars (1.2.6) of the differential piston (1.2)
k =      form factor of the regulating contour (1.2.4)

**9.** Valve device according to one of Claims 1 to 8, **characterised in that** bars (1.2.5) to support the sealing surface of the control member are arranged in a star shape on the side of the differential piston (1.2) facing the control space (1.6), around the relief bore (1.2.1) and with an offset relative to the upper edge (1.2.7).

**10.** Valve device according to Claim 5 and optionally one of Claims 4 to 6, **characterised in that** the second rolling diaphragm (1.8) is supported on the other side from the control space (1.6) by a support ring (1.15) which is arranged in a recess of the valve housing (1.1), comprises the control rod (1.9) and can move with the latter.

**11.** Valve device according to one of Claims 1 to 10, **characterised in that** the instrument for recording the volumetric flow through the valve is designed as a flow-rate measuring turbine (2).

**12.** Valve device according to Claim 11, **characterised in that** the flow-rate measuring turbine can be fitted into the valve housing in the form of in insertable cartridge.

**Revendications**

**1.** Dispositif à valve piloté par moteur électrique, comprenant une servovalve actionnée par son propre fluide, qui comprend un piston différentiel (1.2) agencé en translation dans un boîtier de valve (1.1) et portant l'opercule de valve (1.3), avec d'un côté du piston une chambre de pression (1.5) qui est reliée à l'entrée de valve (1E) et qui est reliée à la sortie de valve (1A) au moyen d'un siège de valve (1.4) opposé à l'opercule de valve, et avec de l'autre côté du piston une chambre de commande (1.6) qui est reliée à la sortie de valve (1A) via un perçage de décharge (1.2.1) ménagé au milieu dans le piston différentiel, et qui est reliée à la chambre de pression (1.5) via un perçage de commande (1.2.2) ménagé de façon décentrée dans le piston différentiel, dans lequel la chambre de pression (1.5) est étanchée par rapport à la chambre de commande (1.6) dans la région du bord du piston différentiel (1.2), et le perçage de décharge (1.2.1) peut être refermé du côté chambre de commande par un organe de commande (1.8.1) qui est relié à l'arbre de sortie d'un moteur électrique (1.11) via une tige de commande (1.9) qui sort en translation et de façon étanche hors de la chambre de commande et via une transmission à vis (1.9.1-1.10.1), et dans lequel il est prévu une unité de commande électronique (ST) pour le pilotage du moteur électrique (1.11), **caractérisé en ce que** l'unité de commande (ST) reçoit d'un dispositif (2) pour détecter le courant volumétrique s'écoulant à travers la valve un signal électrique qui caractérise la valeur réelle du courant volumétrique et à partir duquel l'unité de commande (ST) produit un signal de commande en fonction d'une valeur de consigne prédéterminée pour le courant volumétrique et le cas échéant d'autres paramètres de régulation, signal de commande qui est fourni au moteur électrique (1.11).

**2.** Dispositif à valve selon la revendication 1, **caractérisé en ce que** le moteur électrique est un moteur pas à pas (1.11).

**3.** Dispositif à valve selon la revendication 1, **caractérisé en ce que** le moteur électrique est un moteur à courant continu avec capteur incrémental.

**4.** Dispositif à valve selon l'une des revendications 1 à 3, **caractérisé en ce que**, pour étancher la chambre de pression (1.5) par rapport à la chambre de commande (1.6), on se sert d'une première membrane déroulante (1.7) dont la paroi extérieure est reliée de façon étanche au boîtier de valve (1.1) et dont la paroi intérieure est reliée de façon étanche au piston différentiel (1.2), et dans laquelle est intégré l'opercule de valve (1.3) et qui est réalisée à la manière d'un élément de ressort précontraint en direction d'ouverture.

**5.** Dispositif à valve selon l'une des revendications 1 à 4, **caractérisé en ce que** la tige de commande (1.9) est étanchée par rapport à la chambre de commande (1.6) par une seconde membrane déroulante (1.8) dans laquelle est intégré l'organe de commande (1.8.1) tenu par coopération de formes par la tige de commande (1.9).

**6.** Dispositif à valve selon l'une des revendications 1 à 4, **caractérisé en ce que** la tige de commande est étanchée par rapport à la chambre de commande par un soufflet plissé dans lequel est intégré l'organe de commande tenu par coopération de formes par la tige de commande.

7. Dispositif à valve selon l'une des revendications 1 à 6, **caractérisé en ce que**, sur le côté du piston différentiel (1.2) tourné vers le siège de valve (1.4) est agencé un corps de réglage (1.2.4) qui plonge lors de la fermeture dans le siège de valve et dont le contour extérieur prédéterminé est réalisé de telle façon que le débit traversant à pression constante est proportionnel à la levée de la valve.

8. Dispositif à valve selon la revendication 7, **caractérisé en ce que** le corps de réglage (1.2.4) présente à son contour extérieur un nombre prédéterminé de barrettes de guidage (1.2.6) de largeur prédéterminée qui s'étendent radialement et axialement et qui sont guidées sur le siège de valve (1.4), et **en ce que** la dépendance du débit de la valve proportionnelle à la levée est déterminée par les fonctions suivantes :

$$\dot{V}_{(z)} = A_{(z)} \bullet \bar{c} = [\pi \bullet (r_0{}^2 - r_{(z)}{}^2) - n \bullet b(r_0 - r_{(z)})] \bullet \bar{c}$$

$$r_{(z)} = - (n \bullet b / 2\pi) \bullet \{[r_0 + (n \bullet b/2\pi)]^2 - (k \bullet z/\pi)\}^{1/2}$$

dans lesquelles :

$V_{(z)}$ = courant volumétrique en dépendance de la levée
$A_{(z)}$ = section devenue libre au siège de valve (1.4) en dépendance de la levée
$c$ = vitesse d'écoulement moyenne
$r_0$ = rayon du siège de valve
$r_{(z)}$ = rayon en dépendance de la levée
$n$ = nombre des barrettes de guidage (1.2.6) du piston différentiel (1.2)
$b$ = largeur des barrettes de guidage (1.2.6) du piston différentiel (1.2)
$k$ = facteur de forme du contour de réglage (1.2.4).

9. Dispositif à valve selon l'une des revendications 1 à 8, **caractérisé en ce que** des barrettes (1.2.5) pour soutenir la surface d'étanchement de l'organe de commande sont agencées, sur le côté du piston différentiel (1.2) tourné vers la chambre de commande (1.6), en forme d'étoile sur tout le pourtour du perçage de décharge (1.2.1) et avec un décalage par rapport à l'arrête supérieure (1.2.7).

10. Dispositif à valve selon la revendication 5 et en option l'une des revendications 4 à 6, **caractérisé en ce que** la seconde membrane déroulante (1.8) est soutenue, sur le côté détourné de la chambre de commande (1.6), par une bague de soutien (1.15) agencée dans un évidement du boîtier de valve (1.1), qui entoure la tige de commande (1.9) et qui est déplaçable avec celle-ci.

11. Dispositif à valve selon l'une des revendications 1 à 10, **caractérisé en ce que** le dispositif pour détecter le courant volumétrique qui traverse la valve est réalisé sous la forme d'une turbine de mesure de débit (2).

12. Dispositif à valve selon la revendication 11, **caractérisé en ce que** la turbine de mesure de débit peut être mise en place sous la forme d'une cartouche d'insert dans le boîtier de valve.

**Fig. 1**

Fig. 2

Fig. 3

ST

ST1

ST2

1.10.1 1.9.3 1.10
1.9.1 1.11
1.9.2 1.11.1
1.15 1.9
1.8.1 1.14.1
1.13 1.14
1.6 1.8
1.2 1.2.5
1.3 1.2.3
1.7.1 1.7
1.7.2 1.1
1.2.2

2.2 2.8.3
2.1 2.4.1 2.5
2.6.1 2.6
2.9 2.7.2
2
2E
2.8.2 2.7
2.8 2.3.2
2.8.1 2.7.1 2.3 2.3.1
2.4 2A 1E 1.5 1.2.1 1.4 1A
1.2.4

EP 1 114 958 B1

# Fig. 4

Fig. 5

**Fig. 6**

**Fig. 6A**

**Fig. 6B**

**Fig. 6C**